Europäisches Patentamt

European Patent Office    (11) Publication number: **0 314 414**

Office européen des brevets    A2

## (12) EUROPEAN PATENT APPLICATION

(21) Application number: 88309975.6

(22) Date of filing: 24.10.88

(51) Int. Cl.⁴: **B60G 21/02 , B62D 7/14 , B60B 35/06**

(30) Priority: 24.10.87 GB 8724961

(43) Date of publication of application:
03.05.89 Bulletin 89/18

(84) Designated Contracting States:
AT BE CH DE ES FR GR IT LI LU NL SE

(71) Applicant: **Borrow, Edgar Wilfred**
**Padnell Grange Cowplain**
**Portsmouth Hampshire PO8 8ED(GB)**

(72) Inventor: **Borrow, Edgar Wilfred**
**Padnell Grange Cowplain**
**Portsmouth Hampshire PO8 8ED(GB)**

(74) Representative: **Corin, Christopher John et al**
**Mathisen Macara & Co. The Coach House 6-8**
**Swakeleys Road**
**Ickenham Uxbridge UB10 8BZ(GB)**

(54) **Improvements relating to motor vehicles.**

(57) A motor vehicle having at least two longitudinally spaced pairs of wheels 1,2 and 4,5 has the axle of each wheel connected to the axle of a diagonally opposite wheel by a cranked lever bar 6,7 mounted on the underside of the vehicle. Each bar 6,7 has a longitudinally extending centre portion 6a, 7a rotatably mounted in bearings 8,9 fixed to the chassis or underbody of the vehicle, and cranked opposite end portions 6b,6c and 7b,7c connected to the diagonally opposite wheel axles, one end of each bar being connected to its wheel axle through a spring 10,11. In addition, the steering mechanism is preferably arranged to turn the rear wheels of the vehicle simultaneously with the front wheels, but in the opposite direction.

FIG. I.

# IMPROVEMENTS RELATING TO MOTOR VEHICLES

The invention relates to automobiles and other motor vehicles having at least two longitudinally spaced pairs of wheels, and is particularly concerned with long, multiple wheel passenger and load carrying vehicles.

According to the invention, there is provided a motor vehicle having at least two longitudinally spaced pairs of wheels in which each wheel has its axle connected to the axle of a diagonally opposite wheel by a cranked lever bar comprising a central portion mounted longitudinally on the chassis or underbody of the vehicle so that the bar can pivot about the longitudinal axis of the central portion, and opposite end portions rigid with the central portion and extending laterally on opposite sides thereof to the diagonally opposite wheels, such that any increase in the loading placed on one of the wheels causing a change in the relative positions of the wheel and the vehicle body will cause the cranked lever bar to pivot about the longitudinal axis of its central portion and thereby transfer a part of the increased loading to the diagonally connected wheel.

It is to be understood that, as used herein, the term axle is intended to mean the axle assembly or carrier rather than the axle shaft itself.

As will be appreciated, such a construction enables axle loads to be transmitted, in part, directly from one axle to another, and the spreading of wheel axle loads in this way serves to provide the vehicle with excellent handling and load characteristics during operation.

Preferably at least one of the opposite end portions of each cranked lever bar is connected to the respective wheel axle through a spring. The cranked lever bar system will thus constitute the vehicle suspension system, although it may be preferred also to provide at least some of the axles with a shock absorber or other springing.

The opposite end portions of each cranked lever bar may extend substantially at right angles to the longitudinal central portion of the bar, but generally it will be preferred to arrange for the opposite end portions each to form an obtuse angle with the longitudinal central portion of the bar in order to reduce the length of the central portion and thereby minimize the amount by which this portion is able to twist during operation.

As will be appreciated, the cranked lever bars connecting the diagonally opposite wheels of two longitudinally spaced pairs of wheels will need to cross each other at some point. For this purpose, the longitudinal central portions of the two bars are preferably mounted one above the other substantially in the longitudinal vertical median plane of the vehicle, being supported by suitable bearings fixed to the chassis or underbody of the vehicle.

The invention may be applied to conventional four wheel vehicles irrespective of whether they are front wheel drive, rear wheel drive, or four wheel drive vehicles, but is particularly suitable for application to vehicles having at least three longitudinally spaced pairs of wheels. In this case each wheel of each pair will preferably have its axle connected to the axle of the diagonally opposite wheel of the succeeding pair, and the longitudinally spaced pairs will usually be spaced substantially evenly apart.

The handling and load characteristics of a vehicle in accordance with the invention can be further improved by providing the vehicle with a steering mechanism which is connected to at least the front and rear pairs of wheels and is arranged to turn the rear wheels in the opposite direction to the front wheels. This greatly improves turning efficiency, and also tends to reduce the inertial forces acting on passengers and loads during cornering. It also greatly increases the manoeuvrability of the vehicle.

In the case of multiple wheel vehicles having an odd number of longitudinally spaced pairs of wheels, all of the wheels may be steered except the central pair, which thus acts as a pivot for the steered vehicle.

Several possible arrangements in accordance with the present invention will now be described briefly, by way of example, with reference to the accompanying schematic drawings, in which:-

Figure 1 is a plan view illustrating an example of how the invention may be embodied in a four wheel vehicle;

Figure 2 is a perspective view showing the arrangement of the cranked lever bars in the embodiment of Figure 1;

Figure 3 is a plan view illustrating an example of how the invention may be embodied in a six wheel vehicle;

Figure 4 illustrates a constructional detail of the embodiment shown in Figure 3;

Figure 5 illustrates one example of how the cranked lever bars may be arranged in an eight wheel vehicle embodying the invention;

Figure 6 illustrates another example of how the cranked lever bars may be arranged in an eight wheel vehicle embodying the invention;

Figure 7 is a plan view illustrating an example of how the invention may be embodied in a ten wheel vehicle;

Figure 8 is a plan view illustrating an example of how the invention may be embodied in an eighteen wheel vehicle;

Figure 9 is a plan view illustrating an example of how the invention may be embodied in a fourteen wheel vehicle;

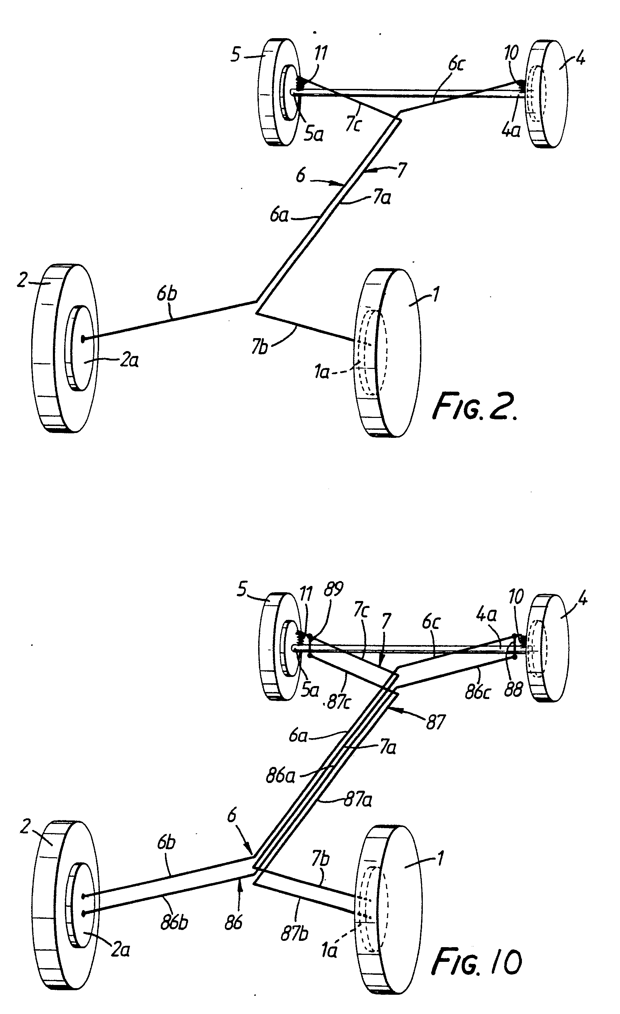

Figure l0 is a view similar to Figure 2, but showing an alternative arrangement; and

Figures 11a and llb illustrate the way in which the front and rear wheels of a vehicle in accordance with the invention are turned when both are steered.

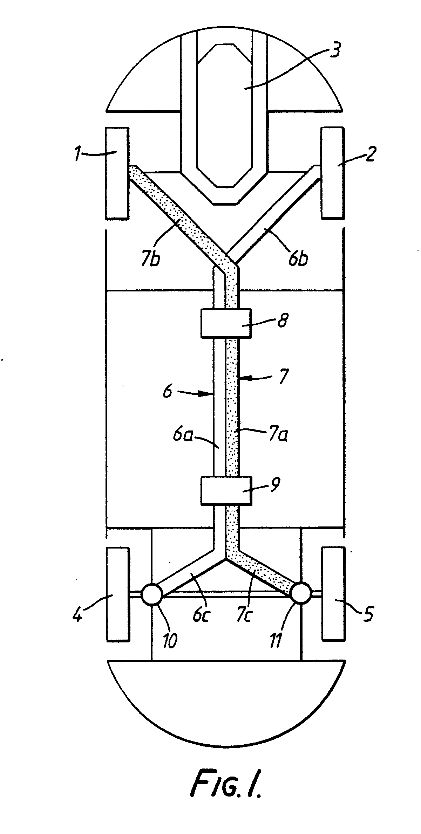

Figures 1 and 2 depict a four wheel vehicle having a pair of front wheels 1,2 which are arranged to be driven by a front mounted engine and gear box 3, and a pair of rear wheels 4,5. In this embodiment (and also the embodiments described hereinafter) the wheels are mounted with respect to the vehicle body or chassis so that each wheel is able to move vertically relative to the body or chassis in response to shocks or load variations exerted on the wheel during operation of the vehicle. The diagonally opposite front and rear wheels 1 and 5 are interconnected by a cranked lever bar 7, and the diagonally opposite front and rear wheels 2 and 4 are similarly interconnected by a cranked lever bar 6 for the purpose of spreading uneven axle loads.

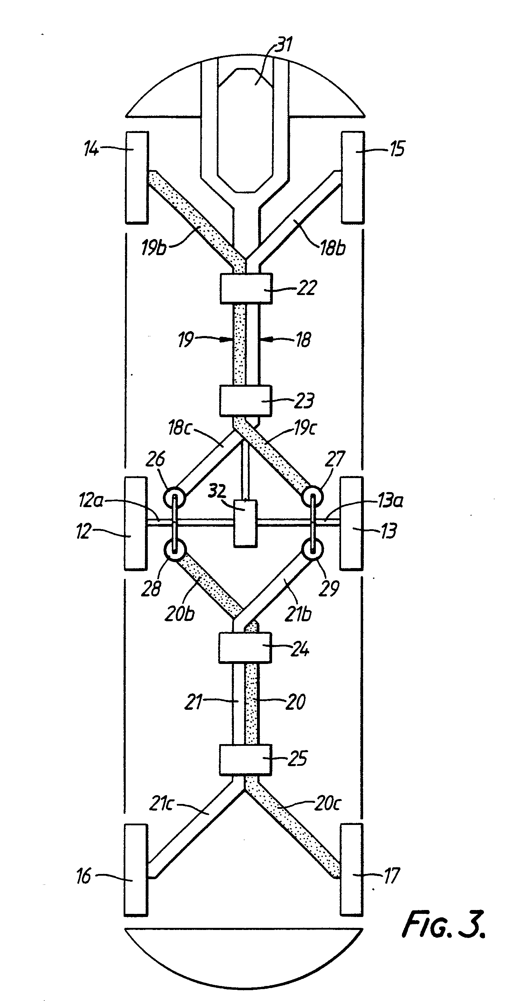

Each cranked lever bar 6,7 has a longitudinally extending central portion 6a, 7a rotatably mounted in bearings 8,9 fixed to the underside of the vehicle, and opposite end portions 6b,6c and 7b,7c extending laterally on opposite sides of the central portion towards the diagonally opposite wheels 2,4 and 1,5. Preferably the central portions 6a and 7a of the two cranked lever bars will be mounted one above the other in the longitudinal vertical median plane of the vehicle as indicated in Figure 2, but are shown side by side in Figure 1 (and also in Figures 3 and 5 to 9) for the sake of clarity.

The cranked front end portions 6b,7b of the lever bars 6 and 7 are angled forwardly from the central portions towards the front wheels 2,1 respectively, and are each pivotally connected to the axle assembly 2a, 1a of the corresponding wheel. Similarly, the cranked rear end portions 6c,7c of the bars 6,7 are angled rearwardly from the central portions towards the rear wheels 4,5, but are each connected to the axle housing 4a,5a of the corresponding rear wheel through a suitable spring as indicated at 10,11 respectively.

With this arrangement an excessive load on any particular wheel will be partly transferred to the diagonally opposite wheel axle, especially in the case of front wheel axle loadings. For example, if a load exerted on the wheel 2 causes the wheel to rise relative to the vehicle body, the cranked lever 6 will be rocked in a clockwise direction (Figure 2) about the longitudinal axis of its central portion 6a so that the rear end portion 6c of the lever exerts, through the spring 10, a force on the axle of the diagonally opposite rear wheel 4 which tends to push the wheel 4 downwards. The load on the wheel 2 is thus shared with the wheel 4 and the spring 10 provides shock absorption, although additional shock absorbers may be provided, if desired, for the front wheels at least.

In the embodiment depicted in Figure 3, the vehicle is provided with three longitudinally spaced pairs of wheels, the intermediate pair of wheels 12,13 being positioned substantially midway between the front and rear pairs of wheels 14,15 and 16,17. The axles 12a, 13a of the centre wheels 12,13 are connected by a first pair of cranked lever bars 18,19 to the axles of the diagonally opposite front wheels 15,14, and by a second pair of cranked lever bars 20,21 to the axles of the diagonally opposite rear wheels 17,16.

Each pair of cranked lever bars 18,19 and 20,21 are similar to the bars 6 and 7 described with reference to Figures 1 and 2, having their longitudinally extending central portions rotatably mounted in bearings 22,23 and 24,25 fixed to the underside of the vehicle. The cranked forward end portions l8b,19b of the lever bars 18,19 are pivotally connected to the front wheel axles, and the cranked rear end portions 20c,21c of the lever bars 20,21 are similarly pivotally connected to the rear wheel axles. On the other hand, the cranked rear end portions 18c,19c of the bars 18,19 and the cranked forward end portions 20b,21b of the bars 20,21 are connected to the centre wheel axles 12a, 13a respectively through springs as indicated at 26, 27, 28 and 29.

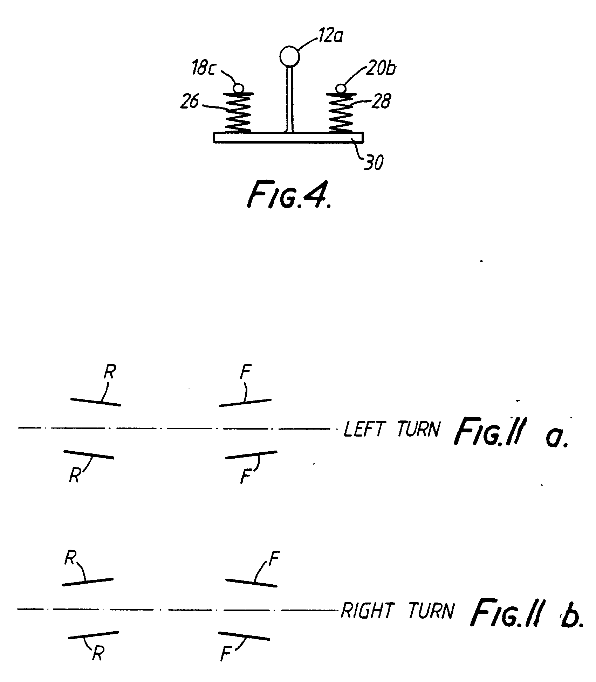

A possible arrangement for the spring connections to the centre wheel axle 12a is illustrated diagrammatically in Figure 4, and it will of course be understood that the connections to the other centre wheel axle 13a will take a similar form. As shown, the axle 12a carries an inverted T-shaped fixing plate 30 on which the cranked end portions 18c,20c of the lever bars 18,20 act through the springs 26 and 28 respectively.

If desired, shock absorbers (not shown) may be arranged to act on the axles 12a, 13a, and also on the axles of the front and rear wheels.

As shown, the vehicle is provided with a front mounted engine and gearbox 31, and in this embodiment the engine is arranged to drive the centre wheels 12 and 13 through a differential as indicated generally at 32, the propshaft (not shown) preferably extending through the bearing blocks 22,23 between the central portions of the cranked lever bars 18,19 which are disposed one above the other. As will be appreciated, the arrangement shown in Figure 3 enables part of the loads exerted on the front and rear wheels to be shared with the centre wheels, thus increasing the loading on the driven centre wheels.

In a possible further application of the invention, a six-wheeled arrangement similar to that shown in Figure 3 may be incorporated in a rail vehicle carriage.

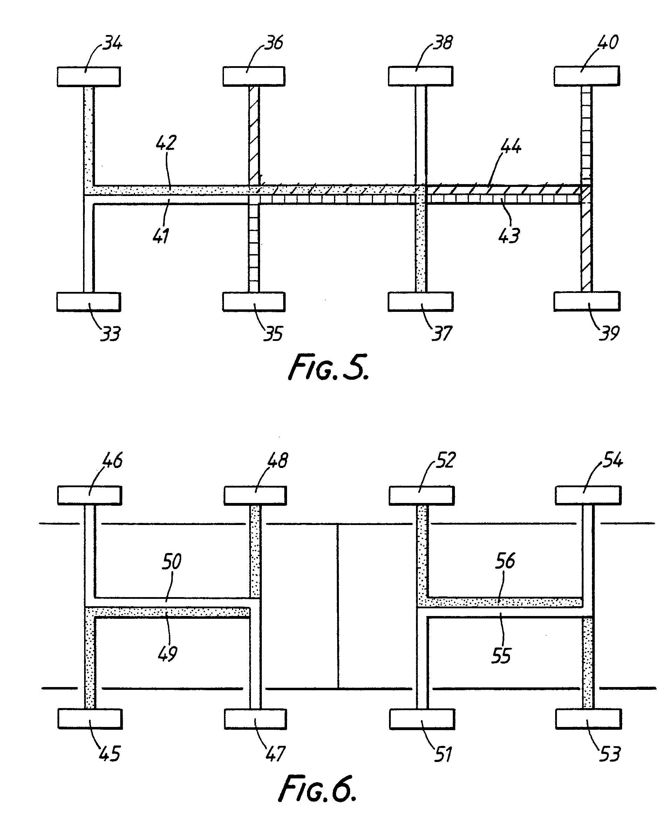

Figures 5 and 6 illustrate two alternative ways in which the invention may be embodied in a vehicle having eight wheels arranged in four longitudinally spaced pairs.

In the first alternative shown in Figure 5, each of the front wheels 33,34 has its axle connected by a cranked lever bar 41,42 respectively to the axle of the diagonally opposite wheel 38,37 of the rearward of the two intermediate pairs of wheels. Similarly, each of the rear wheels 39,40 has its axle connected by a cranked lever bar 44,43 respectively to the axle of the diagonally opposite wheel 36,35 of the forward of the two intermediate pairs of wheels. The cranked end portion of the lever bars connected to the front and rear wheel axles are pivotally connected directly to the axles, whereas their cranked opposite end portions are connected to the axles of the intermediate wheels through springs as in the embodiment of Figures 1 and 2.

In the second alternative shown in Figure 6, which is preferred to that of Figure 5, the axles of the front pair of wheels 45,46 are connected to the axles of the second pair of wheels 47,48 by a pair of cranked lever bars 49,50 in a manner similar to that described with reference to Figure 1, and the axles of the third pair of wheels 51,52 are similarly connected to the axles of the rear wheels 53,54 by a further pair of cranked lever bars 55,56. As in the Figure 5 arrangement, the ends of the cranked lever bars connected to the front and rear wheel axles are pivotally connected directly to the axles, whereas their ends connected to the axles of the intermediate wheels are connected through springs.

As shown in Figures 5 and 6, the opposite end portions of each cranked lever bar extend laterally substantially perpendicularly to its longitudinal centre portion, although they may, if preferred, extend at an angle such as in the embodiments shown in Figures 1 and 3.

In a further possible arrangement (not shown) for an eight wheel vehicle, the two intermediate pairs of wheels may also be interconnected by a pair of cranked lever bars, the end portions of the lever bars being connected to the axles of the wheels through springs. In this case each wheel of each intermediate pair of wheels has its axle connected to two cranked lever bars in a manner similar to the centre wheels 12,13 of the embodiment shown in Figure 3.

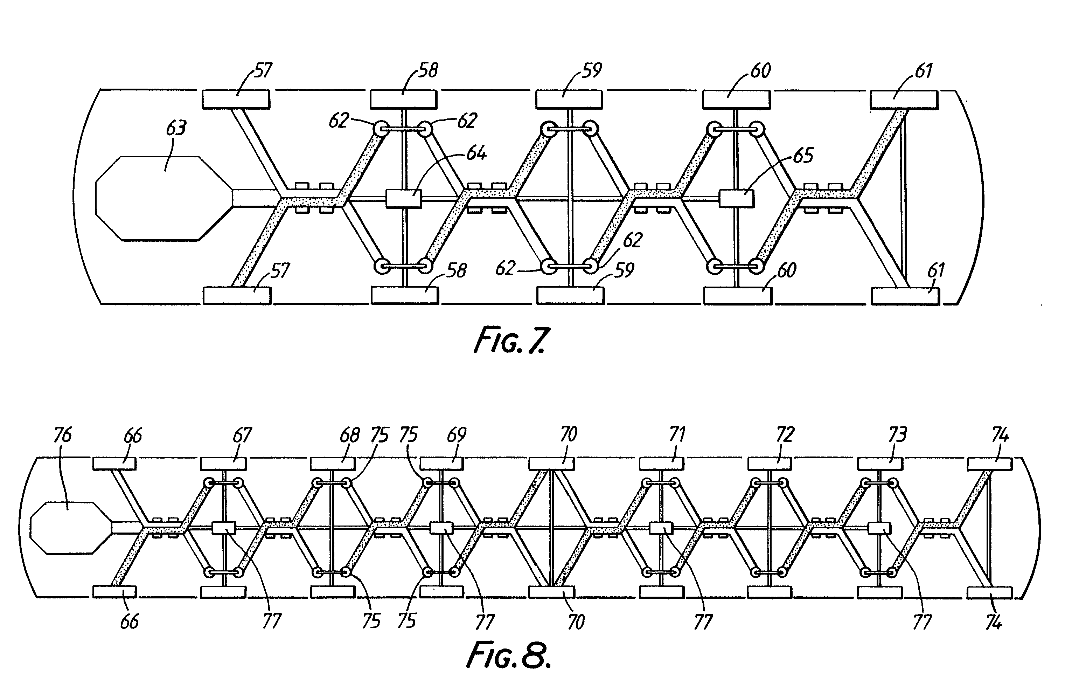

A similar arrangement embodied in a ten wheel vehicle is shown in Figure 7. The vehicle has five longitudinally spaced pairs of wheels 57,58,59,60,61, and each wheel of each pair has its axle connected to the axle of the diagonally opposite wheel of the succeeding pair by a cranked lever bar as shown. In this example each wheel of the front and rear pairs 57,61 has its axle pivotally connected directly to the respective end portion of the associated cranked lever bar, and each wheel of the other pairs of wheels 58,59,60 has its axle connected to the respective ends of the associated cranked lever bars through springs 62, such as described earlier for the centre wheels 12,13 in Figure 3. The vehicle is shown having a front mounted engine and gearbox 63 arranged to drive the second and fourth pairs of wheels 58,60 through differentials 64,65 respectively, although other drive arrangements may of course be used if preferred. In the arrangement shown, the connections of the cranked lever bars to the axles of the centre wheels act as shock absorbers and to share the loading with the second and fourth pairs of wheels, which are the driven wheels. The driven pairs of wheels thus carry increased weight as a result of loads transferred from each adjacent pair of wheels. In addition, shock absorbers will preferably be mounted on all of the wheel axles.

The embodiment illustrated in Figure 8 is similar to that of Figure 7 except that the vehicle is much longer, having nine longitudinally spaced pairs of wheels 66-74, and each wheel of the central pair 70 has its axle pivotally connected directly to the respective ends of the associated cranked lever bars in a manner similar to the wheels of the front and rear pairs 66 and 74 instead of being connected through springs 75 as in the case of the wheels of the other pairs. Also, the front mounted engine 76 is arranged to drive, through differentials 77, the second, fourth, sixth and eighth pairs of wheels which experience increased loading through the cranked lever bars connected to the adjacent pairs of wheels. As in the previous embodiment, shock absorbers may be provided to act on all of the wheels.

Because of its length, it may be preferable to articulate the body and chassis of a vehicle of this construction about a horizontal transverse axis, e.g. near the middle of the vehicle in the region of the central wheels 70.

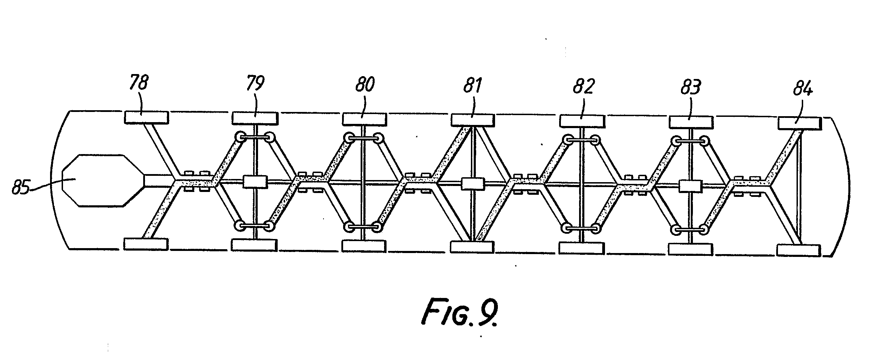

The embodiment illustrated in Figure 9 is similar to that of Figure 8, except that it has only seven longitudinally spaced pairs of wheels 78 to 84, with the second, fourth (i.e. the centre), and sixth pairs being driven through differentials from the front mounted engine and gearbox 85.

The arrangements shown in Figures 7 to 9 are particularly suitable for long passenger or freight vehicles, and it will of course be appreciated that the arrangements are not restricted to vehicles having the particular numbers of wheels shown.

In all of the embodiments described so far, each wheel axle has been shown connected to a diagonally opposite wheel axle by a single cranked lever bar, but it may be preferable, where possible, for each interconnected pair of diagonally opposite wheels to have their axles connected by a pair of cranked lever bars disposed in similar fashion one above the other and arranged to act in parallel with each other. Figure 10 illustrates how such an arrangement may be embodied in the four wheel vehicle of Figures 1 and 2.

In this arrangement two further cranked lever bars 86,87 similar to the lever bars 6,7 are disposed vertically below and parallel to the bars 6,7 respectively. The central portions 6a, 7a, 86a, 87a of the bars are located one above the other in suitable bearing blocks (not shown) so that each is rotatable about its own longitudinal axis. The front end portions 86b,87b of the further bars 86,87 are pivotally connected to the front wheel axle assemblies 2a, 1a in a similar manner to the front end portions of the bars 6,7. The rear end portions 86c,87c of the further bars are each pivotally connected to a vertical spacer link 88,89 respectively which, in turn, is pivotally connected to the rear end part 6c,7c of the corresponding lever bar 6,7 near its spring connection to the rear axle housing 4a,5a. As will be appreciated, the end portions of the lever bars connected to each wheel axle effectively form a parallelogram linkage which substantially strengthens the system and also serves to maintain the wheel substantially upright during vertical movement relative to the vehicle body.

As mentioned earlier, vehicles in accordance with the invention may be further improved by arranging for their steering mechanism to act on at least the front and rear pairs of wheels so that the rear wheels are turned in the opposite direction to the front wheels when the front wheels are turned in order to steer the vehicle. Figures 11a and 11b illustrate the way in which the front and rear wheels F and R of a 4 wheel vehicle equipped with such a steering mechanism will be turned when the vehicle is turning left or right respectively. In the case of 6 wheel vehicles such as shown in Figure 3 it will be usual for only the front and rear wheels to be steered, the centre wheels simply following in the usual manner and effectively acting as a pivot.

In the case of eight and ten wheel vehicles such as shown in Figures 5 to 7, the front two pairs of wheels may be arranged to turn together in one direction, and the rear two pairs of wheels may also be arranged to turn together but in the opposite direction.

In the case of the vehicle shown in Figure 8, the front four pairs of wheels may be arranged to turn together in one direction, while the rear four pairs of wheels turn together in the opposite direction. Similarly, in the case of the vehicle shown in Figure 9, the three front and three rear pairs of wheels may be steered together, but in opposite directions. In both cases the central pair of wheels remain unsteered.

## Claims

1. A motor vehicle having at least two longitudinally spaced pairs of wheels in which each wheel has its axle connected to the axle of a diagonally opposite wheel by a cranked lever bar comprising a central portion mounted longitudinally on the chassis or underbody of the vehicle so that the bar can pivot about the longitudinal axis of the central portion, and opposite end portions rigid with the central portion and extending laterally on opposite sides thereof to the diagonally opposite wheels, such that any increase in the loading placed on one of the wheels causing a change in the relative positions of the wheel and the vehicle body will cause the cranked lever bar to pivot about the longitudinal axis of its central portion and thereby transfer a part of the increased loading to the diagonally connected wheel.

2. A motor vehicle according to claim 1, in which at least one of the opposite end portions of each cranked lever bar is connected to the respective wheel axle through a spring.

3. A motor vehicle according to claim 1 or claim 2, in which the opposite end portions of each cranked lever bar extend substantially at right angles to the longitudinal central portion of the bar.

4. A motor vehicle according to claim 1 or claim 2, in which the opposite end portions of each cranked lever bar each form an obtuse angle with the longitudinal central portion of the bar.

5. A motor vehicle according to any one of the preceding claims in which the central portions of the cranked lever bars connecting the diagonally opposite wheels of two longitudinally spaced pairs of wheels are mounted one above the other substantially in the longitudinal vertical median plane of the vehicle.

6. A motor vehicle according to any one of the preceding claims, in which each interconnected pair of diagonally opposite wheels have their axles connected by a pair of cranked lever bars disposed in similar fashion one above the other and arranged to act in parallel with each other.

7. A motor vehicle according to any one of the preceding claims, in which there are at least three longitudinally spaced pairs of wheels, and each wheel of each pair has its axle connected to the axle of the diagonally opposite wheel of the succeeding pair.

8. A motor vehicle according to claim 7, in which the longitudinally spaced pairs of wheels are spaced substantially evenly apart.

9. A motor vehicle according to claim 7 or claim 8, in which each wheel of the front and rear pairs of wheels has its axle pivotally connected to the respective end of the associated cranked lever bar, and each wheel of the other pair or pairs of wheels has its axle connected to the respective ends of the associated cranked lever bars through springs.

10. A motor vehicle according to claim 7 or claim 8, in which there are at least five longitudinally spaced pairs of wheels, of which each wheel of a central pair as well as the front and rear pairs has its axle pivotally connected to the respective end of the associated cranked lever bar, and each wheel of the other pairs of wheels has its axle connected to the respective ends of the associated cranked lever bars through springs.

11. A motor vehicle according to any one of claims 7 to l0, in which at least one pair of wheels intermediate the front and rear pairs is driven, and the cranked lever bars connecting the driven wheel axles to the axles of the adjacent pairs of wheels are arranged to transfer part of the loading on said adjacent pairs of wheels to the driven pair to increase the weight thereon.

12. A motor vehicle according to claim 11, in which there are an odd number of longitudinally spaced pairs of wheels, and each of the even numbered pairs is driven and additionally loaded from its adjacent pairs of wheels.

13. A motor vehicle according to any one of the preceding claims, having a steering mechanism which is connected to at least the front and rear pairs of wheels and is arranged to turn the rear wheels in the opposite direction to the front wheels.

14. A motor vehicle according to claim 13, in which there are an odd number of longitudinally spaced pairs of wheels, and all the wheels are steered except the central pair which thus act as a pivot for the steered vehicle.

FIG. 1.

FIG. 2.

FIG. 10

FIG. 3.

FIG.4.

LEFT TURN FIG.II a.

RIGHT TURN FIG.II b.

FIG.5.

FIG.6.

FIG.7.

FIG.8.

*FIG. 9.*

EP 0 314 414 A2